Europäisches Patentamt

European Patent Office

Office européen des brevets

(11) Numéro de publication : **0 364 529 B1**

(12) # FASCICULE DE BREVET EUROPEEN

(45) Date de publication du fascicule du brevet :
**27.05.92 Bulletin 92/22**

(51) Int. Cl.$^5$ : **A01N 37/08,** A01N 37/06

(21) Numéro de dépôt : **89903175.1**

(22) Date de dépôt : **01.03.89**

(86) Numéro de dépôt international :
**PCT/FR89/00078**

(87) Numéro de publication internationale :
**WO 89/08395 21.09.89 Gazette 89/23**

(54) COMPOSITIONS FONGICIDES A BASE DE TALLATE DE CUIVRE.

(30) Priorité : **09.03.88 FR 8803163**

(43) Date de publication de la demande :
**25.04.90 Bulletin 90/17**

(45) Mention de la délivrance du brevet :
**27.05.92 Bulletin 92/22**

(84) Etats contractants désignés :
**AT BE CH DE FR GB IT LI LU NL**

(56) Documents cités :
**GB-A- 1 379 440**
**GB-A- 2 016 924**
**GB-A- 2 150 027**
**US-A- 4 177 288**

(73) Titulaire : **SOYEZ, Jean-Louis**
**27, rue de la Gare-de-Reuilly**
**F-75012 Paris (FR)**

(72) Inventeur : **SOYEZ, Jean-Louis**
**27, rue de la Gare-de-Reuilly**
**F-75012 Paris (FR)**

(74) Mandataire : **Sauvage, Renée**
**Cabinet Sauvage 100 bis, avenue de**
**Saint-Mandé**
**F-75012 Paris (FR)**

EP 0 364 529 B1

## Description

La présente invention a pour objet des compositions fongicides actives sur les maladies des plantes, contenant un sel organique de cuivre, dérivé d'un acide tallique (tall oil), ayant une proportion d'acides gras pouvant varier entre 45 et 95%, et d'acides résiniques pouvant varier entre 2 et 45%, sur lequel est fixé du cuivre métal, à raison de 12,5 à 60 g de cuivre métal par litre de produit prêt à l'emploi.

Ce produit, qui sera désigné ci-dessous par "tallate de cuivre" est connu depuis un siècle et présenté comme fongicide des oomycètes.

Ainsi, il est présenté, en mélange avec un solvant et un tensio-actif dans GB-A-1.379.440 et en association avec du chlorothalonil ou un quelconque dinitrile aromatique halogéné dans US-A-4.177.288.

Avec l'apparition des fongicides de synthèse, des phénomènes de résistance acquise par les champignons se sont développés à l'égard, en particulier, de diverses familles chimiques : benzimidazoles, acylalanines, acylamides, dicarboximides et oxazolidinones.

La présente invention qui a pour but de remédier à cette situation repose sur la découverte du fait que l'association du tallate de cuivre avec certains fongicides organiques se traduit par un effet de synergie. Plus précisément, cet effet est constaté lorsque le tallate de cuivre est associé à au moins un autre fongicide organique, choisi parmi les familles chimiques suivantes : acétamides, alkylphosphites métalliques phtalimides, carboximides, benzimidazoles et imidazoles.

Comme acétamide, on peut citer le cymoxanil et comme alkylphosphite métallique, le phoséthyl-aluminium.

Un exemple représentatif des phtalimides est constitué par le folpel.

Comme carboximides, on peut mentionner la vinchlozoline, la procymidone, le chlozolinate et l'iprodione.

La carbendazime, le bénomyl et le thiophanate de méthyle constituent des exemples de benzimidazoles, le prochloraze représentant, lui, la classe des imidazoles.

On a certes déjà associé, avec divers composés du cuivre, le phoséthyl-Al (GB-A-2 150 057) et le cymoxanil (GB-A-2 016 924), mais ces divers composés du cuivre ne comprennent jamais le tallate de cuivre.

Dans une forme d'exécution préférée, l'acide tallique duquel dérive le tallate de cuivre est choisi de telle sorte que 80% de la masse des acides gras sont constitués d'acides oléique, linoléique et/ou linolénique, et que le ou les acide(s) résinique(s) contien(nen)t plus de 80% d'acide abiétique.

Dans la pratique, la composition selon l'invention peut avantageusement contenir un diluant solide ou liquide et au moins deux desdits autres fongicides organiques associés au tallate de cuivre.

L'invention étend sa portée à un procédé de lutte contre les maladies des plantes qui consiste à les traiter in situ avec une quantité efficace de composition selon l'invention en association extemporanée ou prête à l'emploi, de sorte qu'à l'hectare, la quantité de cuivre métal n'excède pas 300 g.

On peut considérer qu'il était admis que le tallate de cuivre, utilisé à des doses cinq à quinze fois plus faibles que les composés minéraux du cuivre, soit 100 à 300 g de Cu métal/ha, permettait, en plus des applications classiques des composés du cuivre (mildiou et maladies de ce type), son utilisation extemporanée, ou la mise au point d'associations liquides prêtes à l'emploi, avec d'autres molécules de synthèse, dont on peut réduire la dose, au-dessous du niveau généralement considéré comme efficace, tout en obtenant un spectre d'action plus vaste sur divers champignons, tels que les oïdiums et les botrytis, et certaines maladies des céréales (pseudocercosporella, érysiphe, fusarium), sur lesquelles s'observent des efficacités synergiques. Ces efficacités synergiques sont inattendues en ce sens, qu'à l'égard de ces maladies, les composés du cuivre sont considérés comme peu ou pas efficaces.

Mais rien ne laissait prévoir qu'utilisé en mélange avec des molécules organiques actives sur les mêmes maladies, mais agissant par des voies radicalement différentes, le tallate de cuivre donnerait naissance à des phénomènes de synergie, démontrés expérimentalement.

Or, il apparaît des observations expérimentales effectuées, que des associations prêtes à l'emploi de certaines molécules organiques de synthèse co-formulées avec le tallate de cuivre, constituent des fongicides liquides de vaste spectre, et très efficaces à doses réduites de chaque constituant. On peut donc bien parler de synergie, comme il ressort des exemples, non limitatifs, ci-après. Dans ces exemples, la présence et la concentration en tallate de cuivre ne sont indiquées que par la concentration en cuivre métal et les lettres minuscules entre parenthèses sont des classements statistiques classiques.

### Exemple 1

Synergie du tallate de cuivre avec le cymoxanil (France 1988, Bordelais).

```
A : Cu 25 g + cymoxanil 12 g (par hectolitre)
B : Cu 25 g                                    "
C : cymoxanil 12 g                             "
```

Après 5 traitements à 14 jours d'intervalle, le pourcentage de surface foliaire attaquée par le mildiou se lit au 11 Octobre :

```
A :     88,1%            (e f g h i j)   parcelle 15
B :     95,6%  (a b c d e)              parcelle  3
C :     97,5%  (a b c d)               parcelle 20
TNT* :  99,1%  (a)
* : témoin non traité.
```

Le calcul de synergie (méthode de Colby) est positif.

Exemple 2

Synergie du tallate de cuivre avec le phoséthyl-aluminium (France 1988).
En Bordelais, on compare (doses par hectolitre) :
A :     Cu 25 g + phoséthyl-Al 60 g
B :     Cu 25 g
C :     phoséthyl-Al 60 g
Après 5 traitements à 15 jours d'intervalle, le pourcentage de surface foliaire attaquée par le mildiou se lit, au 11 Octobre :

```
A : 37,8%                          (n)   parcelle 13
B : 95,6% (a b c d e)                    parcelle  3
C : 67,5%                   (k l m)      parcelle 21
TNT : 99,1%
```

Le calcul de synergie est positif (méthode de Colby).

Exemple 3

Synergie d'une association ternaire tallate de cuivre + cymoxanil + phoséthyl-Al (France 1988, Bordelais), par rapport à l'association binaire tallate de cuivre + cymoxanil sur mildiou de la vigne.
A :     Cu 25 g + cymoxanil 12 g + phoséthyl-Al 60 g/hl
B :     Cu 25 g + cymoxanil 12 g/hl
C :     phoséthyl-Al 60 g/hl.
Les résultats se lisent comme suit, en dégâts de mildiou sur feuilles, au 11 Octobre :

```
A : 49,4%                    (m n) parcelle 19
B : 89,1%      (e f g h i j)       parcelle 15
C : 67,5%              (k l m)     parcelle 21
TNT : 99,1%
```

La méthode de Colby conclut à la synergie.

Exemple 4

Association du tallate de cuivre avec un phtalimide (le folpel) pour le contrôle du mildiou de la grappe (France 1988, Bordelais).

Sept traitements sont appliqués sur Sémillon, à Couhins (Gironde, France).

Avec une concentration de tallate de cuivre équivalant à 25 g de cuivre métal par hl + 100 g de folpel, au 18 Août, l'association (A) (tallate de cuivre + folpel) est au niveau de l'association (B) manzocuivre (sulfate de cuivre 60 g + mancozèbe 40 g) et supérieure à la référence (C) Dithane M 45® (80% mancozèbe).

```
                    Grappes attaquées         Dégâts
        A  :  38,1%   (c d)            6,5%     (c d)
        B  :  36,5%   (c d)            4,7%     (c d)
        C  :  66,9%   (b)             14,3%    (b)
        TNT : 100%    (a)             71,9% (a)
```

Les notations "feuillage" de l'association A, au 5 Septembre, ne sont pas différentes de celles de B et de C (soit 15 jours après le dernier traitement).

Exemple 5

Synergie du tallate de cuivre + folpel avec le cymoxanil (France 1988).

En Bordelais, sur Cabernet-Sauvignon, cinq traitements sont effectués contre le mildiou :

A :     Cu 25 g + folpel 100 g + cymoxanil 12 g/hl

B :     Cu 25 g + folpel 100 g/hl

C :     cymoxanil 12 g/hl.

On contrôle le pourcentage de surface foliaire attaqué au 27 Septembre :

```
        A : 31,2% dégât foliaire            (k l m n) parcelle 16
        B : 65,3%    "        "        (f g h i)      parcelle 11
        C : 84,7%    "        "   (b c d e)           parcelle 20
```

Il y a synergie, d'après la formule de Colby.

En conclusion, il est possible d'associer au tallate de cuivre, en formulations liquides - compte tenu des affinités physico-chimiques du tall oil - diverses molécules organiques de synthèse et tout particulièrement les acétamides - dont le cymoxanil - et le monoéthylphosphite d'aluminium seuls, ou eux-mêmes associés entre eux ou à des phtalimides - en vue de contrôler efficacement, à doses réduites, et sélectivement, certaines maladies cryptogamiques du type mildiou, tavelure, alternariose, ainsi que certaines bactéries.

Dans le cas du Botrytis cinerea, on constate, d'ailleurs, en plus d'une efficacité renforcée sur cette maladie, une efficacité inhibitrice des souches résistantes, comme dans l'essai ci-après :

Exemple 6

Synergie du tallate de cuivre avec les carboximides (France 1988, Bordelais).

Dans un programme de traitement de la pourriture de la vigne, on a pu réduire la dose de vinchlozoline à 25 g/hl - soit un tiers de la dose homologuée, avec des résultats équivalents aux doses homologuées de vinchlozoline et de procymidone (75 g/hl).

Au 25 Septembre :

4

```
                                                          Dégâts
A : Cu 17,5 g/hl + vinchlozoline 25 g/hl  4,6%       (d)
B : Cu 17,5 g/hl                          20% (a b)
C : vinchlozoline 75 g/hl                 5,2%       (d)
D : procymidone 75 g/hl                   4,1%       (d)
TNT :                                     29% (a)
```

Les implications de l'association extemporanée ou prête à l'emploi du tallate de cuivre avec le tiers de la dose d'un quelconque dicarboximide sont très intéressantes pour l'économie de la lutte contre la pourriture (Botrytis) de la vigne.

Mais elles s'étendent aussi à la lutte contre d'autres maladies, Monilia, Alternaria, Sclerotinia, etc.. de diverses cultures - arbres fruitiers, colza, tournesol, légumineuses diverses.

Les autres dicarboximides - encore appelés imides cycliques - réagissent de même :

procymidone

chlozolinate

et iprodione.

Exemple 7

Influence du tallate de cuivre sur des souches résistantes aux dicarboximides.

En plus de ces remarquables efficacités sur des souches de Botrytis cinerea résistantes aux carboximides, on remarquera (Anjou-Brissac 1987) une régression de la fréquence des souches résistantes aux dicarboximides.

Sur une vigne recevant les quatre traitements classiques, on applique :

A : Cu (25 g/hl) + vinchlozoline (50 g/hl)

B : Cu (50 g/hl) seul

C : vinchlozoline (75 g/hl) seul alterné avec du thirame (dose N*)

    * dose homologuée.

L'analyse de la résistance donne :

```
TNT :  43% souches résistantes
A   :  25%     "           "
B   :  10%     "           "
C   :  90%     "           "
```

Ces chiffres, très favorables, le sont encore plus, quand on sait que la réduction des carboximides au tiers ou à la moitié de leur dose homologuée, dans l'association avec le tallate de cuivre, est en elle-même un facteur de réduction de la pression d'induction de résistance, comme le reconnaissent les spécialistes.

On obtient les mêmes avantages en partant des autres carboximides cités à l'exemple 6.

Exemple 8

Synergie entre le tallate de cuivre et la vinchlozoline (France 1989 - Laboratoire INRA Bordeaux).

L'association extemporanée de 175 g + 250 g respectivement des deux éléments (soit au laboratoire 0,41 mg/l de tallate de cuivre + 0,59 mg/l de vinchlozoline formulée) donne :

– sur des souches sensibles, des efficacités réelles supérieures aux efficacités calculées :

```
83% sur souches RbSi* contre 31,7%
82%   "      "    SbSi* contre 16,6%
```

– sur souches résistantes, des efficacités réelles supérieures aux efficacités calculées :

Sur souche RbRi* (54,3 contre 24,5%)

*R : Résistance

*b : Benzimidazoles

*S : Sensibilité

*i : Imides cycliques

Il y a donc bien synergie. On obtient des résultats similaires avec les autres imides cycliques.

## Exemple 9

Synergie du tallate de cuivre avec de faibles doses de carbendazime (Angleterre 1989).

En serre, sur oïdium de l'orge, Erysiphe graminis, on traite une fois les variétés Plaisant et Otter :

| | % maladie | | | |
|---|---|---|---|---|
| | Plaisant | | Otter | |
| | à 8 jours | à 14 jours | à 8 jours | à 14 jours |
| Témoin non traité | 11,3% | 31% | 25,8% | 18% |
| Cu 125g | 3,5% | 6% | 4,7% | 6% |
| carbendazime 100g ma* | 5,8% | 11% | 11,2% | 6% |
| Cu + carbendazime | 1,2% | 8% | 4,7% | 2% |

L'association est égale ou supérieure à chacun des constituants de l'association. On obtient des résultats semblables avec le méthylthiophanate et le bénomyl et le spectre de tels produits associés inclut : piétin-verse, fusarium, oïdium et septoriose, rhynchosporiose et helmintosporiose, sclérotiniose, cylindrosporiose et pseudocercosporellose de diverses cultures (céréales, colza, etc). * = matière active.

## Exemple 10

Synergie du tallate de cuivre avec de faibles doses de fongicides imidazoles et benzimidazoles (France 1988 - départements Seine-Maritime et Essonne) Moyenne de 2 tests.

Un faible apport de tallate de cuivre permet de contrôler le piétin-verse et la septoriose sur blé d'hiver, par de faibles doses de prochloraze (un tiers par dose homologuée) et de carbendazime (la moitié de la dose homologuée), même en zone de résistance aux benzimidazoles.

A : Cu 125 g + prochloraze 250 g + carbendazime 125 g

B : prochloraze (750 g puis 450 g)

Les résultats de deux applications donnent :

| | A | B |
|---|---|---|
| Rendement | + 16,3qx | + 13,3qx |
| Efficacité | | |
| Piétin-verse | 71,5% | 72,5% |
| Septoriose | 55% | 56% |

Là encore, la réduction des doses de benzimidazoles est agronomiquement en faveur de la diminution de la résistance sur blé et orge, tout en contrôlant également le complexe fusarium et oïdium, helmintosporiose et rhyncosporiose, etc.

## Exemple 11

Intérêt de l'association du tallate de cuivre avec les fongicides pour céréales à base de carboximides (Angleterre 1989).

On a comparé, sur oïdium de l'orge (Otter), l'intérêt de l'association :

A :    Cu 125 g + iprodione 200 g + diniconazole 30 g

avec comme références le tridemorphe 560 g et le tallate de cuivre (Cu 125 g).

|  | % oïdium | | |
|--------|--------|--------|--------|
| Produits | T + 8j | T + 14j | T + 21j |
| Cu 125g | 4,7% | 6% | 46% |
| Témoin | 25,8% | 18% | 62% |
| SUMIDIONE(R)N/2 | 0,2% | 1% | 17% |
| A (Cu 125g + SUMIDIONE(R)N/2) | 0% | 1% | 7% |
| référence: CALIXINE(R)N (=tridémorphe) | 0% | 0% | 7% |

**Revendications**

1. Composition fongicide active sur les maladies des plantes, contenant un sel organique de cuivre dérivé d'un acide tallique (tall oil), ayant une proportion d'acides gras pouvant varier entre 45 et 95%, et d'acides résiniques pouvant varier entre 2 et 45%, sur lequel est fixé du cuivre métal, à raison de 12,5 à 60 g de cuivre métal par litre de produit prêt à l'emploi, caractérisée en ce qu'elle renferme au moins un autre fongicide organique choisi parmi les familles chimiques suivantes : acétamides, alkylphosphites métalliques, phtalimides, carboximides et benzimidazoles, imidazoles.

2. Composition selon la revendication 1, caractérisée en ce que l'autre fongicide organique est un composé choisi parmi :

– le cymoxanil et/ou

– le phoséthyl-aluminium

– et, le cas échéant, un phtalimide tel que le folpel.

3. Composition selon la revendication 1 ou 2, caractérisée en ce que l'autre fongicide organique est un composé choisi dans le groupe des carboxinides, tels que :

– la vinchlozoline

– la procymidone

– le chlozolinate

– l'iprodione.

4. Composition selon l'une quelconque des revendications 1 à 3, caractérisée en ce que l'autre fongicide organique est un composé choisi dans le groupe des benzimidazoles, tels que le carbendazime, le bénomyl ou le thiophanate de méthyle.

5. Composition selon l'une quelconque des revendications 1 à 4, caractérisée en ce que l'autre fongicide organique est un composé choisi dans le groupe des imidazoles, tels que le prochloraze.

6. Composition selon l'une quelconque des revendications 1 à 5, caractérisée en ce que l'acide tallique duquel dérive le tallate de cuivre est choisi de telle sorte que 80% de la masse des acides gras sont constitués d'acides oléique, linoléique et/ou linolénique, et que le ou les acide(s) résinique(s) contien(nen)t plus de 80% d'acide abiétique.

7. Composition selon l'une quelconque des revendications 1 à 6, caractérisée en ce que qu'elle contient un diluant solide ou liquide et au moins deux desdits autres fongicides organiques.

8. Composition selon l'une quelconque des revendications 1 à 7, telle que l'association du tallate de cuivre et de l'autre fongicide organique, lorsqu'elle est formulée prête à l'emploi, se présente sous forme liquide.

9. Procédé de lutte contre les maladies des plantes, caractérisé en ce qu'il consiste à les traiter in situ avec une quantité efficace de composition selon l'une quelconque des revendications 1 à 8 en association extemporanée ou prête à l'emploi, de sorte qu'à l'hectare la quantité de cuivre métal n'excède pas 300 g.

**Patentansprüche**

1. Fungizide Zusammenzetzung gegen Pflanzenkrankheiten, die ein von einer Tallsäure (Tallöl) abgeleitetes organisches Kupfersalz mit einem Anteil an Fettsäuren von 45 bis 95 % und Harzsäuren von 2 bis 45 % enthält, an das metallisches Kupfer in einem Anteil von 12,5 bis 60 g metallisches Kupfer pro Liter des gebrauchsfertigen Produkts gebunden ist, dadurch gekennzeichnet, daß es wenigstens ein enderes organisches Fungizid enthält, das aus den folgenden chemischen Familien ausgewählt ist: Acetamide, Metallalkylphosphite, Phtalimide, Carboximide, Bensimidazole und Imidazole.

2. Zusammensetzung nach Anspruch 1, dadurch gekennzeichnet, daß das andere organische Fungizid eine Verbindung ist, die ausgewählt ist aus:
   – Cymoxanil und/oder
   – Phosethyl-Aluminium
   – und ggf. ein Phtalimid wie Folpel.

3. Zusammensetzung nach Anspruch 1 oder 2, dadurch gekennzeichnet, daß das andere organische Fungizid eine Verbindung ist, die ausgewählt ist aus der Gruppe der Carboximide wie:
   – Vinchlozolin
   – Procymidon
   – Chlozolinate
   – Iprodion.

4. Zusammensetzung nach einem der Ansprüche 1 bis 3, dadurch gekennzeichnet, daß das andere organische Fungizid eine Verbindung ist, die ausgewählt ist aus der Gruppe der Benzimidazole wie Carbendazim, Benomyl oder Methylthiophanat.

5. Zusammensetzung nach einem der Ansprüche 1 bis 4, dadurch gekennzeichnet, daß das andere organische Fungizid eine Verbindung ist, die ausgewählt ist aus der Gruppe der Imidazole wie Prochloraz.

6. Zusammensetzung nach einem der Ansprüche 1 bis 5, dadurch gekennzeichnet, daß die Tallsäure, von der das Kupfertallat abgeleitet ist, so gewählt ist, daß 80 % der Masse der Fettsäuren aus Ölsäure, Linolsäure und/oder Linolensäure besteht und daß die Harzsäure bzw. die Harzsäuren mehr als 80 % Abietinsäure enthält bzw. enthalten.

7. Zusammensetzung nach einem der Ansprüche 1 bis 6, dadurch gekennzeichnet, daß sie ein festes oder flüssiges Lösungsmittel und wenigstens zwei der enderen organischen Fungizide enthält.

8. Zusammensetzung nach einem der Ansprüche 1 bis 7, dadurch gekennzeichnet, daß die Kombination des Kupfertallats und des anderen organischen Fungizids bei gebrauchsfertiger Formulierung in flüssiger Form vorliegt.

9. Zusammensetzung sur Bekämpfung von Pflanzenkrankheiten, dadurch gekennzeichnet, daß es darin besteht, daß diese in situ mit einer wirksamen Menge der Zusammensetzung nach einem der Ansprüche 1 bis 8 in einer gebrauchsfertigen oder bei Gebrauch hergestellten Kombination so behandelt werden, daß die Menge an metallischem Kupfer auf einem Hektar 300 g nicht überschreitet.

**Claims**

1. Fungicidal composition active against plant diseases containing an organic salt of copper derived from a tallic acid (tall oil), with a proportion of fatty acids which may vary between 45 and 95 % and of resin acids which may vary between 2 and 45 %, on which metallic copper is fixed, in proportion of 12.5 to 60 grams of metallic copper per liter of ready-to-use product, characterized in that it includes at least one other organic fungicide chosen among the following chemical families : acetamides, metallic alkylphosphites, phthalimides, carboximides, benzimidazoles and imidazoles.

2. Composition according to claim 1, characterized in that the other organic fungicide is selected from :
   – cymoxanil and/or
   – phosethyl-aluminum
   – and, optionally, a phthalimide such as folpel.

3. Composition according to claim 1 or 2, charaterized in that the other organic fungicide is selected from the carboximide group, such as :
   – vinchlozoline
   – procymidone
   – chlozolinate
   – iprodione.

4. Composition according to anyone of claims 1 to 3, charaterized in that the other organic fungicide is selected from the benzimidazole group, such as carbendazime, benomyl or methyl thiophanate.

5. Composition according to anyone of claims 1 to 4, charaterized in that the other organic fungicide is selected from the imidazole group, such as prochloraze.

6. Composition according to anyone of claims 1 to 5, charaterized in that the tallic acid, from which the copper tallate is derived, is chosen so that 80% of the mass of the fatty acids are composed of oleic, linoleic and/or linolenic acids, and that the resin acid/acids contains/contain more than 80% of abietic acid.

7. Composition according to anyone of claims 1 to 6, characterized in that it includes a solid or liquid diluent and at least two of the other said organic fungicides.

8. Composition according to anyone of claims 1 to 7, characterized in that the association of cooper tallate with the other organic fungicide, when in ready-to-use form, is in the liquid form.

9. Method for fighting against plant diseases, characterized in that it consists in treating the plants in situ with an effective quantity of composition according to anyone of claims 1 to 8 prepared extemporaneously or ready-to-use, so that for 1 hectare the quantity of metallic copper used does not exceed 300 grams.